# EUROPEAN PATENT APPLICATION

(11) **EP 4 534 853 A1**
(43) Date of publication of application: **09.04.2025**
(21) Application number: 24199359.1
(22) Date of filing: 10.09.2024
(51) Int. Cl.: F15B 9/03

(54) **REVERSE MODULATING ELECTROHYDRAULIC BRAKE VALVE WITH ADJUSTABLE PRESSURE REDUCING VALVE**

(30) Priority: 06.10.2023 US 202318482173
(71) Applicant: ZF Off-Highway Solutions Minnesota Inc., North Mankato, Minnesota 56003 (US)
(72) Inventor: BACKES, Peter, North Mankato 56003 (US); TILLMAN, Bryce, North Mankato 56003 (US)
(74) Representative: ZF Friedrichshafen AG

(57) **Abstract**

Disclosed is an electrohydraulic valve that includes a pressure reducing valve in a single monoblock valve body. In one example, the valve is a reverse modulating valve with a body having an output port (B), a pressure supply port (P), and a tank port (T). The electrohydraulic valve is configured as a spool valve having a return spring, a feedback pin, and a proportional solenoid, where the proportional solenoid is arranged to oppose the return spring and feedback pin. An externally adjustable pressure reducing valve is between the pressure supply port (P) and the electrohydraulic spool valve. Above a current threshold, increasing current to the solenoid proportionally reduces pressure at the output port (B). Examples of a braking system incorporating the valve are also disclosed.

## Description

### TECHNICAL FIELD

The present disclosure relates generally to electrohydraulic brake valves (EBVs) and more particularly to a reverse modulating electrohydraulic brake valve that includes an adjustable pressure reducing valve (PRV).

### BACKGROUND

In a traditional hydraulic brake system, such as a Hydraulic Apply Spring Release (HASR) brake system, pressing the brake pedal exerts force on a piston in the master cylinder, causing hydraulic fluid to flow from the fluid reservoir and downstream pressure is increased, ultimately forcing the brake to engage. For example, pressure may be applied to calipers, which create a clamping force to engage brake pads on a brake disc, or pressure may be applied to wheel cylinders, which force brake shoes outward to engage the inside of a spinning drum. Upon releasing the brake pedal, the piston in the master cylinder returns to the resting position, relieving hydraulic pressure to release the brake. Other brake systems utilize a Spring Apply Hydraulic Release (SAHR) approach, in which springs mechanically apply the brakes and hydraulic brake pressure is used to counteract the spring force in normal operation to allow the vehicle wheels to spin freely.

Whether used in a HASR or SAHR brake system, hydraulic brake pressure may be applied and modulated by various means. Instead of using a master cylinder to create brake pressure, many off-highway vehicles utilize a 3-way proportional spool valve to modulate supply pressure (P) to brake pressure (B). The spool valve may be actuated directly by a mechanical means, hydraulically by a pilot valve, or electromechanically by a solenoid. In a reverse-modulating valve, brake pressure is inversely proportional to the force applied to it.

### SUMMARY

The present disclosure relates to an electrohydraulic brake valve, particularly a reverse-modulating electrohydraulic brake valve (EBV) that includes an adjustable pressure reducing valve (PRV) in a single valve body. The PRV allows system supply pressure to be adjusted down to the desired maximum brake pressure, which is a default pressure that will be applied downstream of the brake pressure port (B) when no current is applied to the solenoid. As current increases, brake pressure reduces. In one example embodiment, the EBV is configured as a dual spool valve with a solenoid, where the PRV is externally adjustable. When the solenoid is not energized, the valve acts simply as a pressure reducing valve (PRV), which can be set with a discrete adjustment screw. When the solenoid is activated and after reaching an offset or deadband current, the output (brake) pressure is modulated down to zero, inversely proportional to the increase in solenoid current.

The features and advantages described herein are not all-inclusive and, in particular, many additional features and advantages will be apparent to one of ordinary skill in the art in view of the drawings, specification, and claims. Moreover, it should be noted that the language used in the specification has been selected principally for readability and instructional purposes and not to limit the scope of the disclosed subject matter.

### BRIEF DESCRIPTION OF THE DRAWINGS

FIG. 1 is a plot of brake pressure vs. current showing the modulation curve for variants of a direct-operated, reverse-modulating electrohydraulic brake valves, in accordance with some embodiments of the present disclosure.
FIG. 2 is a plot of brake pressure versus current for two different inlet pressures provided to a reverse-modulating electrohydraulic brake valve, in accordance with another embodiment of the present disclosure.
FIGS. 3A and 3B illustrate a perspective view and a top view, respectively, of a reverse-modulating electrohydraulic brake valve with integrated adjustable PRV, in accordance with an embodiment of the present disclosure.
FIG. 4 schematically illustrates a reverse-modulating electrohydraulic brake valve with an integrated adjustable pressure reducing valve, in accordance with an embodiment of the present disclosure.
FIG. 5 schematically illustrates a braking system incorporating a combination valve, in accordance with an embodiment of the present disclosure.

The figures depict various embodiments of the present disclosure for purposes of illustration only. Numerous variations, configurations, and other embodiments will be apparent from the following detailed discussion.

### DETAILED DESCRIPTION

Disclosed is an electrohydraulic brake valve (EBV) that includes an adjustable pressure reducing valve in a single valve body. In one example embodiment, the EBV is a reverse-modulating EBV configured as a dual spool valve with a solenoid. When the solenoid is not energized, the valve acts as a pressure reducing valve (PRV), where the PRV is adjustable with a discrete adjustment screw. When the solenoid is activated with current greater than an offset or deadband current, the output pressure to the brake is modulated down to zero inversely proportionally to increasing solenoid current.

Advantageously, the proposed reverse-modulating electrohydraulic brake valve provides more consistent performance in reverse modulating applications compared to existing approaches. For example, the integrated PRV mitigates difficulties associated with needing a constant supply pressure for optimal performance. The adjustability allows for repeatable and predictable brake pressure output with no current to the solenoid, avoiding downstream over pressurization that may cause damage to the braking system.

An EBV as variously disclosed herein can be used in a hydraulic apply, spring release (HASR) brake system, in addition to other applications. In a HASR brake system, for example, the solenoid can be activated during normal vehicle operation to allow the wheels to spin freely. As a failsafe, such as in the event of an electrical power loss, the brakes are applied with a pre-set pressure via the integrated adjustable PRV to slow the vehicle to a stop. Alternatively, in normal operation when voltage is available, the vehicle can be programmed to apply/modulate the brakes electrohydraulically for remote or autonomous operation, accident avoidance, hill descent, and other applications. Numerous variations and advantages will be apparent from the present disclosure.

### OVERVIEW

One type of direct-operated, reverse-modulating electrohydraulic brake valve, known for example as an EBV-R valve, has a bias spring that provides a spring force opposing a hydraulic pressure acting on a reaction area. The spring force corresponds to the set maximum brake pressure. A force balance is created between the bias spring force and the hydraulic pressure acting on the reaction area. The valve also includes a solenoid that provides a proportional counter force on the spring. As current increases to the solenoid, the counter force increases, thereby reducing the net bias spring force and modulating the brake pressure proportionally down to zero. This type of brake valve is designed to maintain a pre-set output pressure and is not significantly impacted by variations in supply pressure, provided that the supply pressure is greater than the set output pressure.

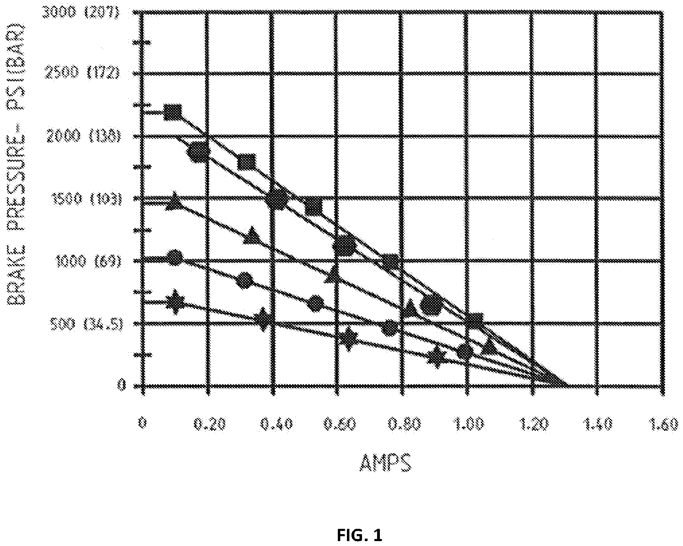

A plot of pressure versus current for five variants of the EBV-R is shown in FIG. 1. The five variants differ by changing the bias spring force and/or the reaction area. For each variant, for current above a threshold current of approximately 0.1A, the brake pressure reduces proportionally with increasing solenoid current. Note that the slope of pressure reduction is different for each variant. The different slopes are necessary in order to achieve zero brake pressure at approximately the same solenoid current. In this example, the brake pressure is reduced to zero at approximately 1.3 amps for each of the variants. However, one challenge is that this type of valve has difficulty maintaining its set pressure when no power is applied to the solenoid. This is due to its additional internal components (compared to other valves) that contribute to the overall friction within the valve without the benefit of dither. This condition can result in pressure oscillations of varying amplitude and frequency at the output port of the EB V-R as the spool within attempts to find a consistent modulating position, also known as pressure hunting, and can cause difficulty in setting the pressure at the factory.

Another electrohydraulic brake valve, known for example as an EBV-A valve, is a direct-operated electrohydraulic brake valve designed for use in antilock brake systems (ABS). Such valve includes a bias spring and a solenoid acting in opposition to one another. The valve is fully open between the inlet pressure and brake ports when no power is supplied to the solenoid. In such condition, the brake pressure is equal to the inlet pressure. As current is applied to the solenoid and exceeds the current threshold or deadband value, the solenoid force increases in opposition to the bias spring. For current above the threshold, brake pressure reduces proportionally and inversely to increasing solenoid current.

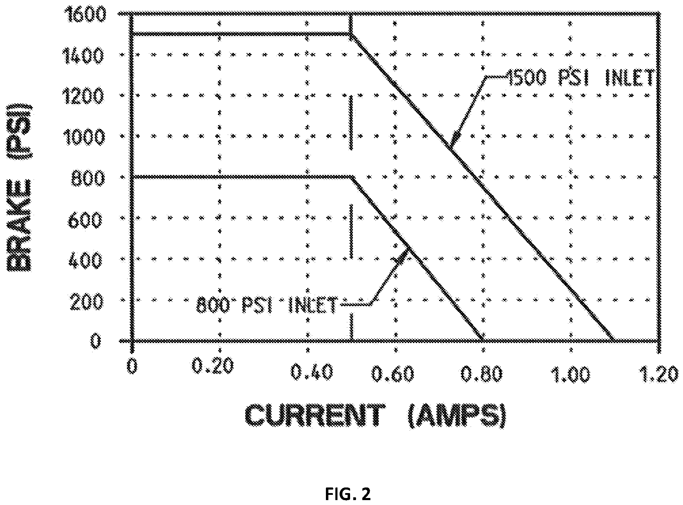

In a plot of EBV-A brake pressure versus current, shown for example in FIG. 2, the brake pressure is equal to supply pressure until a threshold current value of approximately 0.5 A, at which point the brake pressure decreases proportionally with increasing solenoid current. For current above the threshold value, brake pressure decreases at the same rate regardless of supply pressure. That is, for current above the threshold value, the slope of the line is independent of supply pressure. Thus, the useful range of solenoid current is directly affected by the inlet pressure, where a different supply pressure will require a different solenoid current to achieve zero brake pressure. Such valve does not have the challenge of pressure hunting discussed above, but the valve needs a consistent supply pressure in order to achieve a consistent brake pressure, and also in order to achieve zero brake pressure at a given solenoid current.

To address the foregoing challenges, the present disclosure provides a dual spool valve with a solenoid. In one example, an adjustable pressure reducing valve (PRV) is combined with a reverse-modulating, electrohydraulic brake valve (EBV) in a single valve body. The adjustable PRV and the EBV can be arranged side-by-side in the valve body, such as a dual-spool valve. In another example, the PRV may be in the form of a cartridge valve which is installed into the EBV block. Such a valve can be configured for use in an electrohydraulic, reverse modulating brake system, for example. One advantage of the combined valve is that the performance benefits of the EBV-A can be realized, but steady-state brake pressure at zero current is not significantly affected by variation in supply pressure.

For example, due to the relatively higher threshold current required to begin pressure reduction (e.g., 0.5A vs. 0.1A), the combination valve provides more accurate pressure modulation with less hysteresis over its entire pressure range compared to the EBV-R valve. Also, the combination valve benefits from lower overall friction within the valve. Further, the valve's dither amplitude is proportional to the overall solenoid current, which can be very helpful in producing smooth and predictable pressure modulation.

A combination valve configured according to the present disclosure advantageously enables the EBV portion of the valve to be a pass-through valve until reverse modulation is needed. For example, the output pressure (B) of the combination valve is not significantly subject to variation in supply pressure when no current is applied to the solenoid because the valve spool is open between the output of the PRV and the Brake port, contrasting the EBV-A valve, which produces a brake pressure output that is equal to the supply pressure.

A combination valve configured according to the present disclosure advantageously enables the valve to produce a consistent brake pressure due to the spool position and component configuration by reducing the overall friction acting upon it. For example, the output pressure (B) of the combination valve shall be stable and predictable, as the spool in the EBV portion of the combination valve is open between the output of the PRV and the Brake port, contrasting the EBV-R valve spool which is in a modulating position and is subject to pressure hunting.

The PRV portion of the combination valve advantageously can enable adjustability of steady state brake pressure. That is, the combination valve can be tuned for use in a wide range of applications. This functionality in a single valve body eliminates the need for additional components, thus simplifying the braking system and installation. In addition, the combination valve allows each valve to be tuned individually, which can be very beneficial in applications having multiple valves operating with the same supply pressure. Inclusion of the PRV can also eliminate one or more potential leak points in the hydraulic plumbing.

### EXAMPLE EMBODIMENTS

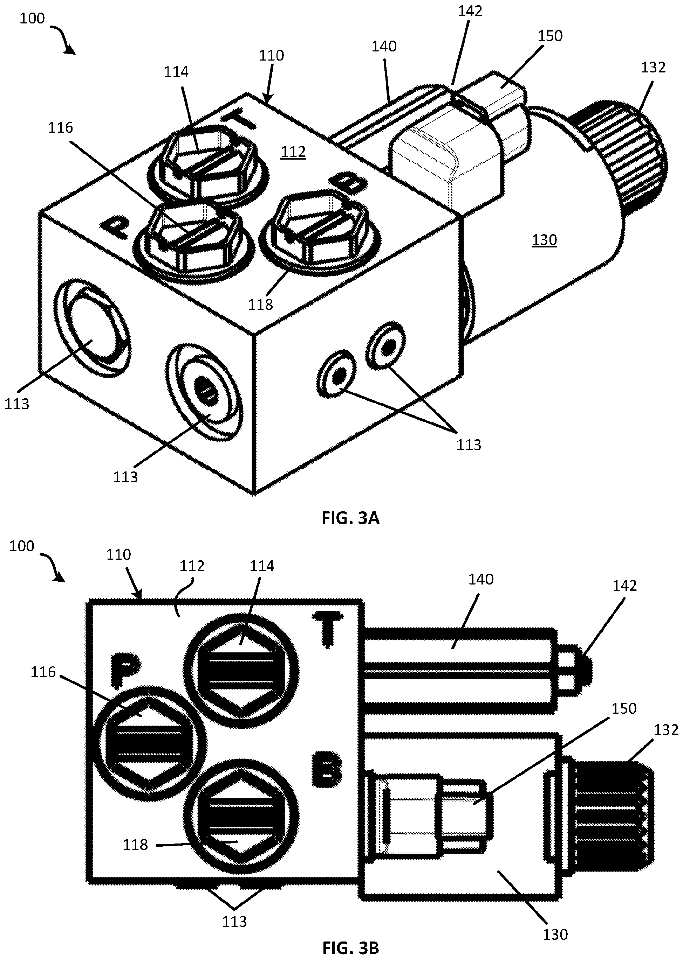

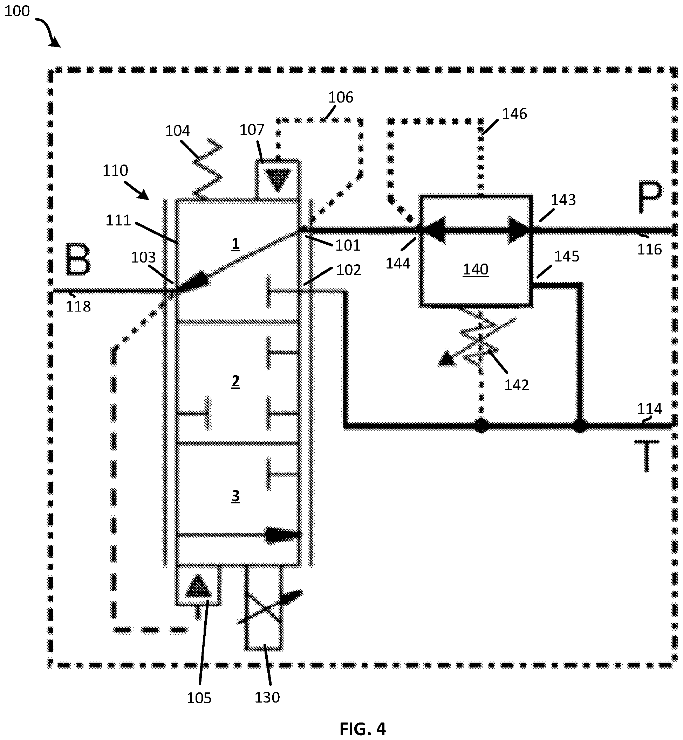

FIGS. 3A and 3B illustrate a perspective view and a top view, respectively, of a combination valve 100 having an electrohydraulic brake valve 110 (or "EBV" 110) and an integrated adjustable pressure reducing valve 140 in a single housing 112, in accordance with an embodiment of the present disclosure. The valve 100 includes a housing 112 that defines a tank port (T) 114, a supply pressure inlet port (P) 116, and a brake pressure output port (B) 118. Various port plugs 113 are intended to be permanent and not removed, as will be appreciated. A proportional solenoid 130 is operably connected to the housing 112 and is arranged to oppose the valve's bias or return spring 104 (not visible; shown schematically in FIG. 4). The solenoid 130 includes a manual override (not shown), in some embodiments. The solenoid 130 includes a solenoid coil and a solenoid tube, which are held together by a coil nut 132. The solenoid 130 can operate with a supply voltage of 12 VDC or 24 VDC, for example by replacing the solenoid coil with that of a different electrical resistance. An electrical connector 150 is also provided for connecting electrical power to the solenoid 130.

FIG. 4 schematically shows a combination valve 100, in accordance with an embodiment of the present disclosure. As noted with reference to FIGS. 3A-3B, valve 100 combines an electrohydraulic valve (EBV) 110 and a pressure reducing valve (PRV) 140 in a single housing. Accordingly, combination valve 100 can be referred to as a monoblock valve. In this example, the EBV 110 is configured as a three-port, three-position proportional spool valve with a valve spool 111 movable continuously among a first position 1, a second position 2, and a third position 3. Ports 101, 102, 103 are labeled only in the first position 1 in FIG. 4 for clarity of illustration. EBV 110 has a return spring 104 and an internal pilot pressure 105 arranged to act in opposition to one another on the reaction area. The internal pilot pressure 105 is the pressure differential between the pressure from the PRV (at port 101) and the pressure at the brake pressure outlet port B 118. Solenoid 130 is arranged to act in opposition to the return spring 104, providing a second force or modulation force to counter the spring force. The valve spool 111 can move continuously among the three positions 1, 2, 3 based on a balance of forces acting on the valve spool 111 by the return spring 104, internal pilot pressure 105, pilot pressure 106 from the PRV 140 directly acting on the valve spool 111, and proportional solenoid 130. When no current is provided to the proportional solenoid 130, the valve spool 111 is in Position 1 as shown in FIG. 4. When current is applied to the solenoid 130, the solenoid 130 reduces the pressure to the brake port 118 so long as the current is above a threshold value, such that increasing the current above the threshold value proportionally reduces the output pressure, such as shown in FIG. 2. In some embodiments, the threshold current is from 0.4A to 0.6A, or about 0.5A. Other values of threshold current can be used, depending on the return spring 104, operating voltage, and other factors and as deemed appropriate for a particular application.

In some embodiments, EBV 110 has a connecting passage 106 between the first port 101 and one end of the EBV spool 111. The force acting on the valve spool 111 from hydraulic pilot pressure from port 101 is illustrated by 107. The EBV has a feedback pin (not shown) within the spool that creates the reaction area noted above, contributing to the opposing pilot pressure. A diameter of the feedback pin affects the rate of pressure reduction with increasing current to the proportional solenoid 130, as will be appreciated.

Adjustable pressure reducing valve 140 is arranged between the pressure input port (P) 116 on the housing 112 and the first port 101 of the EBV 110. Pressure from the supply pressure port 116 is received at an inlet port 143 of the PRV 140. Pressure reducing valve PRV 140 has PRV adjustor 142 configured as a variable spring, for example, where the PRV adjustor 142 is operable to adjust (e.g., reduce) the hydraulic pressure delivered to the EBV 110 from the output port 144 of the PRV 140. As such, PRV 140 functions as a regulator to deliver the desired supply pressure to the EBV 110.

In some embodiments, PRV 140 has a sensing line 146 configured to sense pressure at the PRV output port 144 or other position downstream thereof. The PRV 140 is normally open for pressures at PRV output port 144 up to a set delivery pressure. If the delivery pressure at PRV output port 144 is greater than a set value, the PRV 140 reduces the pressure to the set level. Excess pressure can be vented to tank (T) 114 via the PRV tank port 145.

In the first position 1, as shown in FIG. 4, for example, the EBV 110 is open between the first port 101 and the third port 103, where the valve spool 111 directs supply pressure as set by the PRV 140 to the brake port (B) 118. Thus, the brake pressure at the brake port (B) 118 is the same as the reduced supply pressure at PRV outlet port 144. In the second position 2, the valve is closed, or also referred to as the modulating position. In the third position 3, the third port 103 is open to the second port 102, where brake pressure is vented to tank (T) 114.

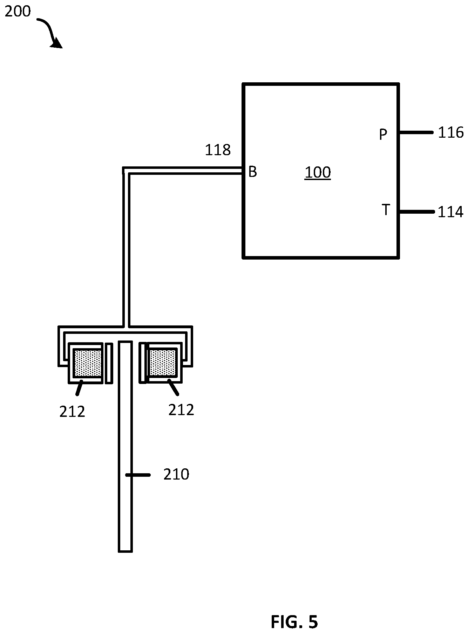

FIG. 5 schematically illustrates a braking system 200 incorporating the combination valve 100, in accordance with an embodiment of the present disclosure. The braking system 200 includes a brake rotor 210, which is engaged by caliper 212 relative to the pressure at the brake pressure outlet port 118.

In use, the PRV 140 can provide a consistent pressure to the valve spool 111 of the EBV so that pressure can be repeatably modulated to zero at a consistent solenoid current. For example, a hydraulic system may have a supply pressure of 3000 PSI and the desired input pressure to the EBV 110 is 1500 PSI. The PRV reduces the pressure to the set value for delivery to the EBV 110. So long as the system supply pressure is above 1500 PSI, the EBV 110 can be modulated to zero pressure at the same solenoid current. In systems having a single hydraulic supply pressure that is used for multiple components, for example, combination valve 100 can be set to provide consistent performance. Unlike a combination of separate EBVs and PRVs, the combination valve 100 simplifies plumbing connections, reduces cost, and potentially eliminates the need for pressure reducing valves for each component in the hydraulic system. For a hydraulic braking system, the combination valve 100 enables correct delivery pressure to the brake by setting the PRV for a given application.

The combination valve 100 can be configured for use in a traditional hydraulic apply, spring release (HASR) brake system, a spring-apply hydraulic-release (SAHR) brake system, or other hydraulic system requiring a maximum set pressure with zero electrical current and having pressure modulation inversely proportional to current (after reaching current threshold). Numerous variations and embodiments will be apparent in light of the present disclosure.

### FURTHER EXAMPLE EMBODIMENTS

The following examples pertain to further embodiments, from which numerous permutations and configurations will be apparent.

Example 1 is a monoblock valve that includes a body having an output port, a pressure supply port, and a tank port. An electrohydraulic spool valve in the body has a return spring, a pressure feedback pin, and proportional solenoid, where the proportional solenoid is arranged to oppose the return spring and the pressure feedback pin. A pressure reducing valve is between the pressure supply port and the spool valve.

Example 2 includes the monoblock valve of Example 1, where the pressure reducing valve is externally adjustable.

Example 3 includes the monoblock valve of any one of Examples 1 or 2, where the proportional solenoid is electronically controlled.

Example 4 includes the monoblock valve of any one of Examples 1-3, where the electrohydraulic spool valve is movable across a continuous range to meter hydraulic communication between a first port, a second port, and a third port, where the first port communicates with an output port of the pressure reducing valve, the second port is the output port of the monoblock valve, and the third port communicates with the tank port.

Example 5 includes the monoblock valve of Example 4, where the first position of the electrohydraulic spool valve is an open position in which the first port is open to the output port of the body.

Example 6 includes the monoblock valve of any one of Examples 1-6, where when no current is applied to the proportional solenoid, the electrohydraulic spool valve allows an outlet pressure from the pressure reducing valve to be present at the output port of the body, and when current applied to the proportional solenoid is greater than a threshold current, pressure at the output port is reduced proportionally and inversely to the current applied to the proportional solenoid.

Example 7 includes the monoblock valve of Example 6, where the threshold current is from 0.4A to 0.6A.

Example 8 includes the monoblock valve of any one of Examples 1-7, where a rate of pressure reduction at the output port when current applied to the proportional solenoid is above a threshold current is determined at least in part by a diameter of the pressure feedback pin.

Example 9 is an electrohydraulic brake valve that includes a body having a brake port, a pressure supply port, and a tank port. A spool is slidably retained in the body to meter hydraulic communication between a first port, a second port, and a third port. A return spring provides a spring force on the spool in a first direction and a pressure feedback pin is arranged to provide a return force on the spool in opposition to the spring force. A proportional solenoid is configured and arranged to provide, when sufficiently energized, a modulation force in opposition to the spring force. A pressure reducing valve is between the pressure supply port and the first port. The spool is movable in response to a balance of the spring force, the return force, and the modulation force along a continuous range of positions between a first position in which the first port is open to the third port, a modulation position, and a third position in which the second port is open to the third port.

Example 10 includes the electrohydraulic brake valve of Example 9, where the pressure reducing valve is externally adjustable.

Example 11 includes the electrohydraulic brake valve of any one of Examples 9 or 10, configured as a reverse-modulating electrohydraulic brake valve, where the proportional solenoid is configured to increase the modulation force proportionally with increasing current above a predefined current threshold.

Example 12 includes the electrohydraulic brake valve of Example 11, where the current threshold is at least 0.4 A.

Example 13 includes the electrohydraulic brake valve of any one of Examples 9-12, where the modulation force is zero when no current is applied to the proportional solenoid.

Example 14 includes the electrohydraulic brake valve of any one of Examples 9-13, where the proportional solenoid is electronically controlled.

Example 15 is a braking system including the electrohydraulic brake valve any one of Examples 9-14 or the monoblock valve of any one of Examples 1-8.

Example 16 includes the braking system of Example 15, configured as a spring apply hydraulic release braking system.

Example 17 includes the braking system of Example 15, configured as a hydraulic apply spring release braking system.

Example 18 is a motor vehicle comprising the braking system of any one of Examples 15-17.

Example 19 includes the motor vehicle of Example 18, where the motor vehicle is configured as an off-highway vehicle.

The foregoing description of example embodiments has been presented for the purposes of illustration and description. It is not intended to be exhaustive or to limit the present disclosure to the precise forms disclosed. Many modifications and variations are possible in light of this disclosure. It is intended that the scope of the present disclosure be limited not by this detailed description, but rather by the claims appended hereto. Future-filed applications claiming priority to this application may claim the disclosed subject matter in a different manner and generally may include any set of one or more limitations as variously disclosed or otherwise demonstrated herein.

## Claims

1. A monoblock valve comprising:
a body having an output port, a pressure supply port, and a tank port;
an electrohydraulic spool valve in the body, the spool valve having a return spring, a pressure feedback pin, and proportional solenoid, wherein the proportional solenoid is arranged to oppose the return spring and the pressure feedback pin; and
a pressure reducing valve between the pressure supply port and the spool valve.

2. The monoblock valve according to claim 1, wherein the pressure reducing valve is externally adjustable.

3. The monoblock valve according to claim 1, wherein the proportional solenoid is electronically controlled.

4. The monoblock valve according to claim 1, wherein the electrohydraulic spool valve is movable across a continuous range to meter hydraulic communication between a first port, a second port, and a third port, wherein the first port communicates with an output port of the pressure reducing valve, the second port is the output port of the monoblock valve, and the third port communicates with the tank port.

5. The monoblock valve according to claim 4, wherein the first position of the electrohydraulic spool valve is an open position in which the first port is open to the output port of the body.

6. The monoblock valve according to claim 1, wherein when no current is applied to the proportional solenoid, the electrohydraulic spool valve allows an outlet pressure from the pressure reducing valve to be present at the output port of the body, and when current applied to the proportional solenoid is greater than a threshold current, pressure at the output port is reduced proportionally and inversely to the current applied to the proportional solenoid.

7. The monoblock valve according to claim 6, wherein the threshold current is from 0.4A to 0.6A.

8. The monoblock valve according to claim 1, wherein a rate of pressure reduction at the output port when current applied to the proportional solenoid is above a threshold current is determined at least in part by a diameter of the pressure feedback pin.

9. An electrohydraulic brake valve comprising:
a body having a brake port, a pressure supply port, and a tank port;
a spool slidably retained in the body to meter hydraulic communication between a first port, a second port, and a third port;
a return spring providing a spring force on the spool in a first direction;
a pressure feedback pin arranged to provide a return force on the spool in opposition to the spring force;
a proportional solenoid configured and arranged to provide, when sufficiently energized, a modulation force in opposition to the spring force; and
a pressure reducing valve between the pressure supply port and the first port;
wherein the spool is movable in response to a balance of the spring force, the return force, and the modulation force along a continuous range of positions between a first position in which the first port is open to the third port, a modulation position, and a third position in which the second port is open to the third port.

10. The electrohydraulic brake valve of claim 9, wherein the pressure reducing valve is externally adjustable.

11. The electrohydraulic brake valve of claim 10, configured as a reverse-modulating electrohydraulic brake valve, wherein the proportional solenoid is configured to increase the modulation force proportionally with increasing current above a predefined current threshold.

12. The electrohydraulic brake valve of claim 11, wherein the current threshold is at least 0.4 A.

13. The electrohydraulic brake valve of claim 12, wherein when no current is applied to the proportional solenoid, the modulation force is zero.

14. The electrohydraulic brake valve of claim 13, wherein the proportional solenoid is electronically controlled.

15. A braking system including the reverse-modulating electrohydraulic brake valve of claim 11.

16. The braking system of claim 15, configured as a spring apply hydraulic release braking system.

17. The braking system of claim 15, configured as a hydraulic apply spring release braking system.
